# EUROPEAN PATENT APPLICATION

(11) **EP 1 288 536 A1**
(43) Date of publication of application: **05.03.2003**
(21) Application number: 01938557.4
(22) Date of filing: 07.06.2001
(51) Int. Cl.: F16J 15/10

(54) **GASKET**

(30) Priority: 07.06.2000 JP 2000170484
(71) Applicant: UCHIYAMA MANUFACTURING CORP., Okayama-shi, Okayama 702-8004 (JP)
(72) Inventor: SAKUMOTO, Naruo Uchiyama Manufacturing Corp., Akasaka-cho, Akaiwa-gun Okayama 701-2221 (JP)
(74) Representative: Mounteney, Simon James
(86) International application number: JP0104817
(87) International publication number: WO01094815

(57) **Abstract**

An annular gasket having a seal material (2) disposed on an unwoven cloth (1) capable of preventing a lateral flow so as not to reduce a compressive stress by disposing the seal material (2) annularly on the unwoven cloth (1) using the thin and soft unwoven cloth (1) as a core material, wherein the seal material (2) is disposed annularly on the front and rear surfaces of the unwoven cloth (1), whereby the shape of a sealing member can be maintained, a seal performance can be increased, and a cost and size can be reduced.

## Description

### BACKGROUND OF THE INVENTION

### Field of the Invention

The present invention relates to a seal material that includes a thin and flexible unwoven cloth. More particularly, the present invention relates to a gasket that comprises such unwoven cloth and an elastic material that are combined together into a single unit.

### Description of the Prior Art

As one example of the gasket of the type mentioned above, there is one that has been developed as a seal material for a solid high-polymer fuel cell. Such gaskets typically have the construction that is specifically designed for use with the solid high-polymer fuel cell. In many cases, this type of gasket is often used to close the solid high-polymer fuel cell so tightly that the gas that is produced in its solid high-polymer electrolytic films cannot escape from the fuel cell.

Typically, the gasket may be mounted within the fuel cell by placing it between the collector electrodes on which the solid high-polymer electrolytic film is formed. More specifically, each of the collector electrodes has a flange to which the gasket may be secured, and the gasket is securely held between the flanges.

The flanges are usually made of carbon. As the carbon has less resilience or elasticity, the carbon flanges may be broken easily when they are subject to any local load, making the carbon flanges unusable.

To avoid the above problem, the gasket may be made of any elastic material, such as synthetic rubber or synthetic resin material, which has a high hardness (such as, for example, the one that has the hardness in the range of between 70 and 90 degrees). As the synthetic rubber, for example, has a low spring constant, the synthetic rubber gasket that is mounted to the carbon flanges can prevent the breakage of the carbon flanges when the carbon flanges are placed under the local load.

It should be noted, however, that the carbon flanges have the surfaces that are not smooth, and have the surface roughness that would prevent the rubber gasket from being secured to the carbon flanges tightly. Thus, when the gasket made of any synthetic rubber or synthetic resin material having the high hardness as described above is mounted to the carbon flanges, it cannot seal the fuel cell sufficiently, and it would be useless to mount such gasket to the carbon flanges.

One possible solution to the above problem would be the choice of any synthetic rubber that has both a low hardness and a good agreeability with the carbon flanges.

For example, it is possible to provide a seal material that would have a medium hardness as well as medium agreeability, and form a gasket using such seal material. The gasket thus formed from such seal material may meet both of the requirements for the hardness and agreeability, although it is not sufficient to meet with a low hardness and a good agreeability. This makes the gasket look like the gasket that provides the functions that are required for the gasket. In fact, however, the said gasket is not exactly the required gasket but simply acts like the required gasket because it does not satisfy the requirements completely. Therefore, this gasket is not expected to provide the essential solution to the problem addressed by the present invention.

Specifically, if the gasket is formed from a seal material that has a relatively high hardness and a relatively low spring constant, and is mounted to the carbon flanges, it would prevent the breakage of the carbon flanges under the stress conditions, but would not be able to seal the carbon flanges having the rough surfaces sufficiently, whereas if the gasket is formed from a seal material that has a relatively low hardness, and is mounted to the carbon flanges, the carbon flanges might have the shapes affected by the gasket, and it is difficult to maintain the shape of carbon flanges.

Accordingly, the present invention addresses the above-described problem, and solves it by providing a gasket that is designed for use with any mechanical parts or elements that are easy to be broken when they are placed under any local stress condition. Specifically, the object of the present invention is to provided a gasket which can secure and seal the part or element tightly and firmly so that the part or element can provide its increased functional performance and reliability. The gasket may be used in a broad range of applications, such as sealing the solid high-polymer fuel cells described above, as well as other mechanical parts or elements in general.

### SUMMARY OF THE INVENTION

One aspect of the present invention is an annular gasket that includes an unwoven cloth formed from a natural or synthetic fiber and a seal material, comprised of any high-polymer material, that is disposed on the unwoven cloth, wherein the unwoven cloth formed into a thin film is impregnated with the seal material so that the seal material can be disposed annularly on some portions of the front and rear sides of the thin-film unwoven cloth or an end of the unwoven cloth, or both of them.

Another aspect of the present invention is an annular gasket that includes an unwoven cloth formed from a natural or synthetic fiber and a seal material, comprised of any high-polymer material, that is disposed on the unwoven cloth, wherein the unwoven cloth formed into a thin film is first impregnated with a first seal material having a particular functional property so that the first seal material can be disposed inside the unwoven cloth, and then a second seal material having a different functional property from the first seal material is disposed on either or both of the front and rear sides of the unwoven cloth.

Still another aspect of the present invention is an annular gasket that includes an unwoven cloth formed from a natural or synthetic fiber and a high-polymer seal material that is disposed on the unwoven cloth, wherein the unwoven cloth formed into a thin film is first impregnated with a first seal material having a particular functional property so that the first seal material can be disposed inside the unwoven cloth, and then a second seal material having a different functional property from the first seal material is disposed annularly on some portions of the front and rear sides of the unwoven cloth.

### BRIEF DESCRIPTION OF THE ACCOMPANYING DRAWINGS

Fig. 1 is a sectional view illustrating a first preferred embodiment of the present invention;
Fig. 2 is a sectional view illustrating a second preferred embodiment of the present invention;
Fig. 3 is a sectional view illustrating a third preferred embodiment of the present invention;
Fig. 4 is a sectional view illustrating a fourth preferred embodiment of the present invention; and
Fig. 5 is a sectional view illustrating a fifth preferred embodiment of the present invention;

### BEST MODES OF EMBODYING THE INVENTION

The present invention is now described in further detail with reference to several particular preferred embodiments thereof shown in the accompanying drawings.

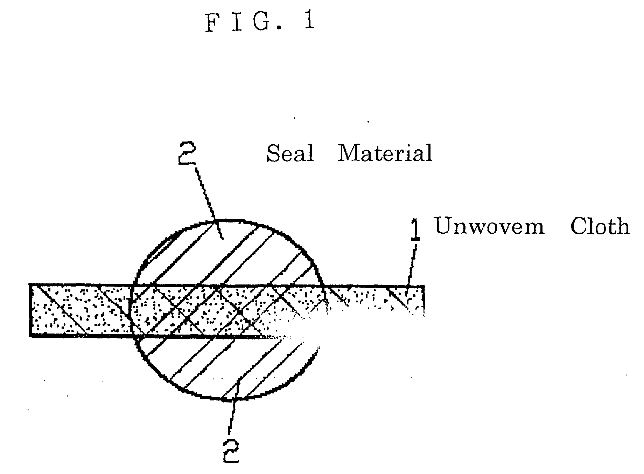

Referring to Fig. 1, there is shown a first embodiment of the annular gasket according to the present invention that includes an unwoven cloth 1 formed from a natural or synthetic fiber and a seal material 2 composed of any rubber material or any high-polymer material of any synthetic resin material, wherein the seal material 2 is disposed on the unwoven cloth 1. It may be seen from Fig. 1 that the unwoven cloth 1, which is formed into a thin film, is impregnated with the seal material 2 so that the seal material 2 may be disposed annularly on some particular portions of the front and rear sides of the thin-film unwoven cloth 1.

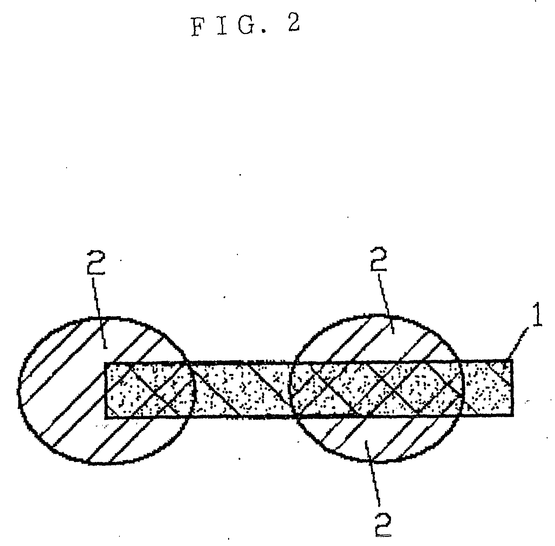

Referring next to Fig. 2, there is shown a second embodiment of the annular gasket according to the present invention, which represents a variation of the annular gasket of Fig. 1. As shown in Fig. 2, the unwoven cloth 1, which is formed into a thin film, is impregnated with the seal material 2 so that the seal material may also be disposed annularly on one end of the thin-film unwoven cloth 1.

The embodiment shown in Fig. 2 may have two forms. In one form, as shown in Fig. 2, the unwoven cloth 1, which is formed into a thin film, is impregnated with the seal material 2 so that the seal material 2 may be disposed annularly on some particular portions of the front and rear sides of the unwoven cloth 1, and may also be disposed annularly on one end of the unwoven cloth 1. In the other form, not shown, the unwoven cloth 1 is impregnated with the seal material 2 so that the seal material 2 may only be disposed annularly on one end of the unwoven cloth 1.

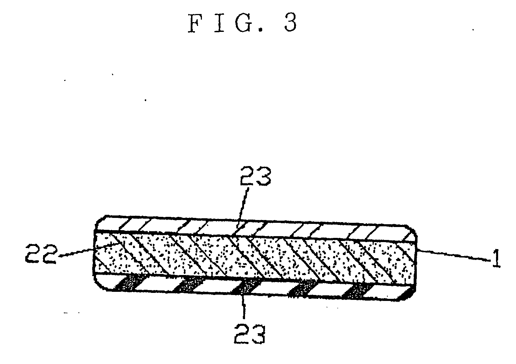

Fig. 3 shows a third embodiment of the annular gasket according to the present invention that includes an unwoven cloth 1 formed from a natural or synthetic fiber and a seal material 2 composed of any high-polymer material of any synthetic resin material, wherein the unwoven cloth 1, which is formed into a thin film, is firstly impregnated with the seal material 2 so that the seal material 2 may be disposed inside the unwoven cloth 1. And then, the other seal material 23, which has a different functional property from the seal material 22, such as different hardness or different type of material, is disposed on the front and rear sides of the unwoven cloth 1 already impregnated with the first seal material 22.

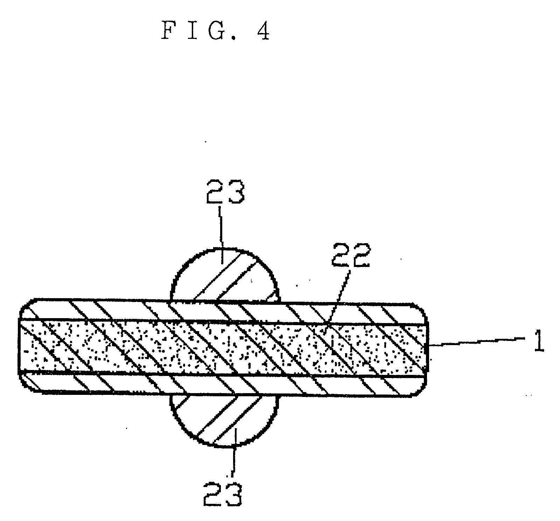

Fig. 4 shows a fourth embodiment of the annular gasket according to the present invention, which represents a variation of the annular gasket of Fig. 3. In this variation, the second seal material 23, that is, the one that provides a different function from the first seal material 22, may be disposed annularly on some particular portions of the front and rear sides of the unwoven cloth 1 already impregnated with the first seal material 22.

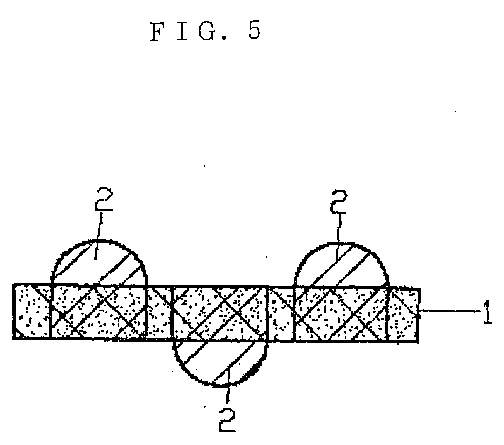

Referring finally to Fig. 5, there is shown a fifth embodiment of the annular gasket according to the present invention that includes an unwoven cloth 1 formed from a natural or synthetic fiber and a seal material 2 composed of any rubber material or any high-polymer material of any synthetic resin material, in which the seal material 2 is disposed on the unwoven cloth 1. Specifically, as shown in Fig. 5, the unwoven cloth 1, which is formed into a thin film, is impregnated with the seal material 2 so that the seal material 2 may be disposed annularly on some particular portions of the front and rear sides of the thin-film unwoven cloth 1, in such a manner that the seal material 2 on the front side and the seal material 2 on the rear side may appear alternately on the unwoven cloth 1.

As it may be appreciated from the description that has been provided so far in connection with the various embodiments of the present invention, the thin and flexible unwoven cloth 1, which is formed into the thin film, may be used as a core for the gasket. Specifically, the unwoven cloth 1 may be impregnated with the seal material 2 so that the seal material 2 may be disposed annularly on either some particular portions of the front and rear sides of the unwoven cloth 1 or the end of the unwoven cloth 1, or on both of them, with the other portions of the front and rear sides of the unwoven cloth 1 remaining without being disposed by the seal material 2.

In the embodiments shown in Figs. 3 and 4, the two seal materials, each having a different functional property, may be used, wherein the unwoven cloth 1, which is formed into a thin film, may first be impregnated with one seal material 22 so that the seal material 22 may be disposed inside the unwoven cloth 1, thereby forming the core for the gasket, and may then be impregnated with the other seal material 23 having the different function from the one seal material 22 so that the seal material 23 may be disposed on the front and rear sides of the unwoven cloth 1. The gasket thus obtained has lamination layer construction including the two different seal materials that are disposed inside and on the unwoven cloth 1, respectively.

It may be appreciated from the foregoing description that the gasket according to the present invention may provide the two mutually opposed properties, such as the low spring constant and the excellent agreeability. Thus, any lateral flow of the seal material that may be caused by the compression can be prevented.

It may also be appreciated that the gasket according to the present invention allows those portions of the unwoven cloth impregnated with the seal material 2 to prevent any lateral flow of the seal material, with the other portions of the unwoven cloth not impregnated with the seal material 2 providing the space to allow for any deformation, thereby preventing any stress relief that might otherwise occur.

Furthermore, it may be appreciated that the gasket according to the present invention may comprise the unwoven cloth that has the creep property and acts as the core for the gasket, which is coupled with the seal material that has the good sealing tightness. Thus, the gasket may be used for any fragile mechanical parts or elements, and can seal those parts or elements well with excellent sealing tightness and ensuring that parts or elements being able to retain their original shapes. This may be achieved at less cost.

In the embodiment in which the unwoven cloth 1 is first impregnated with one seal material 22, and is then impregnated on its front and rear sides with the other seal material 23 having a different functional property, such as a different hardness or a different type of material from the one seal material 22 on either or both of the front and rear sides of the unwoven cloth 1, the gasket thus obtained may be mounted to any area of any particular mechanical part or element that requires the sealing tightness, and can thus meet a wider range of requirements. In this sense, the gasket is versatile.

The base materials that may be used for forming the unwoven cloth 1 according to the present invention include any natural or synthetic fiber, such as cotton, hemp, glass, carbon, nylon, aromatic polyamide, and the like.

When the unwoven cloth 1 is impregnated with the seal material 2 so that the seal material can be disposed annularly on some particular portions of the front and rear sides of the unwoven cloth, this may be performed by using the various shaping methods, such as the screen print shaping, the transfer print shaping, or the nozzle-jet pattern shaping. The conventional mold shaping that is widely used may also be used.

When the screen print shaping method is used, the seal material, which has the viscosity that has been reduced by any solvent in order to permit the seal material to pass through the particular screen meshes, may be disposed annularly on the unwoven cloth 1. In this case, the seal material can have the great flexibility that allows the seal material to be shaped into any form. Thus, when the unwoven cloth is impregnated with the seal material, it can be disposed annularly on some particular portions of the unwoven cloth with the other portions remaining not to be impregnated.

When the transfer print shaping method is used, the unwoven cloth 1 may have an adhesive applied thereto, and the seal material may then be placed on its mount. Then, the seal material may be shaped by transferring it onto the unwoven cloth. When the nozzle-jet pattern shaping method is used, the seal material 2 may be shaped on the unwoven cloth by moving the nozzle freely and then jetting the seal material through the nozzle so that it can conform to the shape of the unwoven cloth 1.

In the embodiment in which the unwoven cloth 1 is first impregnated with one high-polymer seal material 22 so that it may be disposed inside the unwoven cloth 1, and another seal material 23 is disposed on the front and rear sides of the unwoven cloth 1 impregnated with the one seal material 22, the unwoven cloth 1 may first be impregnated with a rubber-like latex, and may then be impregnated with a certain amount of any rubber-like latex by using rollers or other means. Then, the rubber-like latex may be allowed to become hard. This usually occurs in the prior art.

In the arrangement having this disposition, it may be seen that the unwoven cloth 1 is first impregnated with the seal material 22 so that the seal material 22 can be disposed inside the unwoven cloth 1, which is then impregnated with another seal material 23 having a different function from the seal material 22 so that the other seal material 23 can be disposed on either or both of the front and rear sides of the unwoven cloth 1, which has been impregnated with the seal material 22. Herein, the expression "another seal material 23 having a different function" should be understood to mean that another (or the other) seal material 23 may have a different functional property, such as elastic hardness or type of material.

The seal material 23 that is disposed on the front and rear sides of the unwoven cloth 1 may also have a different functional property for each of the front and rear sides.

It may be appreciated that the seal material 2 may be disposed on the front and rear sides of the unwoven cloth 1 in such a manner that the seal material on the front side and the seal material on the rear side appear alternately, as shown in Fig. 5.

The seal material 2 that best meets the objects of the present invention may include rubber, thermoplastic elastomer or resins, and the like. For example, the rubber may include butyl rubber, styrene butadiene copolymer, ethylene vinyl acetate copolymer, ethylene methyl acrylate copolymer, ethylene ethyl acrylate copolymer, butadiene rubber, silicone rubber, fluorocarbon rubber, ethylene propylene rubber, and the like.

It may be appreciated that the seal materials 22 and 23 may be disposed on the unwoven cloth so that one seal material 22 or 23 containing the rubber having a relatively high hardness may be disposed inside while another seal material 23 or 22 containing the rubber having a relatively low hardness may be disposed on the surface side. In this way, the mutually opposed requirements can be satisfied, that is, the loads upon the finished gasket can be distributed evenly, while at the same time the gasket can be mounted to any mechanical part or element having the surface roughness that would otherwise make it difficult to seal such mechanical parts or elements. It should be understood that the above disposition may be reversed, depending upon the particular needs.

For the practical use, the unwoven cloth 1 may be formed into a thickness of between 0.1 mm and 1.0 mm by pressing it under the applied heating or by sewing it.

Although the seal material 2 may be composed of any of the substances mentioned above, it may also be composed of any foamed resins that can meet the requirements described above. When the seal material 2 is composed of any foamed resin, it can have a low hardness as well as a good agreeability.

It should be noted that the unwoven cloth 1 may be obtained by stamping a sheet blank after the seal material 2 or the seal materials 22 and 23 have been disposed on the sheet blank. In this way, the unwoven cloth 1 can be formed easily and efficiently.

The present invention has been described so far, assuming that the gasket according to the present invention is used for the particular purpose of sealing the solid high-polymer fuel cell, but it may be used for other applications without limitation. Those applications include automobile parts or elements and other mechanical parts or elements in general, which can be sealed tightly and effectively by using the gasket according to the present invention.

Although the present invention has been described with reference to the particular embodiments thereof, it should be understood that the present invention is not limited to those embodiments, and various changes and modifications may be made without departing from the spirit and scope of the present invention as defined in the appended claims.

## Claims

1. An annular gasket including an unwoven cloth formed from a natural or synthetic fiber and a seal material composed of a high polymer material and disposed annularly on the said unwoven cloth, wherein
the unwoven cloth is formed into a thin film, and is impregnated with the seal material so that the seal material is disposed annularly on some predetermined portions of the front and rear sides of the thin-film unwoven cloth or one end of the unwoven cloth, or both of them.

2. An annular gasket including an unwoven cloth formed from a natural or synthetic fiber and a seal material composed of a high polymer material and disposed annularly on the said unwoven cloth, wherein
the unwoven cloth is formed into a thin film, and is impregnated with a first seal material so that the first seal material is disposed inside the unwoven cloth, and the a second seal material having a different functional property, from the first seal material is disposed annularly on either or both of the front and rear sides thereof.

3. The annular gasket as defined in Claim 2, wherein the second seal material is disposed annularly on some predetermined portions of the front and rear sides of the thin-film unwoven cloth previously impregnated with the first seal material inside.
